# EUROPEAN PATENT SPECIFICATION

(11) **EP 0 276 624 B1**
(45) Date of publication and mention of the grant of the patent: **03.02.1993**
(21) Application number: 87630269.6
(22) Date of filing: 17.12.1987
(51) Int. Cl.: H02K 17/26, H02K 19/06

(54) **Switched reluctance motor**
Reluktanzmotor für Umformerspeisung
Moteur à reluctance alimenté par convertisseur

(30) Priority: 28.01.1987 US 7630
(43) Date of publication of application: 03.08.1988
(73) Proprietor: EMERSON ELECTRIC CO., St. Louis Missouri 63136 (US)
(72) Inventor: Obradovic, Ilija Jovan, Belgrad (YU)
(74) Representative: Waxweiler, Jean

(56) References cited:
- AT-B- 135 601
- DE-B- 1 162 465
- GB-A- 396 855
- US-A- 3 679 953

## Description

The invention relates to an electric motor comprising a stator having a yoke and a central bore for rotation of a rotor therein, said stator having four equally spaced teeth extending radially inwardly from the yoke of the stator to define the central bore,
a rotor assembly for rotation in the central bore of the stator, said rotor assembly having three equally spaced teeth extending radially outwardly from the central axis of the motor to terminate in close proximity to the stator teeth; and
stator windings associated with the stator teeth to generate a magnetic field in the central bore to cause rotation of the rotor assembly.

AT-B-135 601 discloses a motor of the above described type.

Switched reluctance motors have attracted considerable attention over the past ten to fifteen years, primarily due to the simplicity of their construction and high power densities (ratio between output power and weight). These motors are doubly salient motors, having teeth on both the stator and the rotor, with phase windings only on the stator poles.

Except for very small (below 50 watt) motors, most switched reluctance motors are designed to operate below 2000 RPM because the core losses in switched reluctance motors are several times larger than in conventional machines of the same size. For that reason, conventional wisdom is that switched reluctance motors are best suited for low speed applications. Of course certain applications such as air cooling compressor motors are required to operate at much higher speeds, such as 6000 RPM.

Early switched reluctance motors for larger power levels had six poles on the stator and four on the rotor. To reduce the number of power switches required to supply power to these motors, later designs adopted an 8/6 construction (eight stator poles and six rotor poles), which required fewer power switches and had improved starting torque.

In order to limit the core losses in prior machines, the direction of the stator magneto-motive force (mmf) was selected in such a way that the mmf direction in the rotor changed only once per full rotor revolution. In this way, the high frequency flux changes, which are proportional to the number of rotor poles, appeared only in the stator poles and the edges of the rotor poles. As a result, the core losses in the stator yoke and rotor core were reduced at the expense of some torque imbalance. Of greater concern are the losses in the stator poles due to flux bypass with such a construction. This bypass flux produces a torque in the opposite direction, and the bypass mmf has the opposite direction from the main mmf to be established when the next phase is energized. This change in the mmf direction in the stator poles of prior motors increased the range of flux variation and lead to increased core losses in stator poles.

In addition to the normal losses due to eddy currents and hysteresis, core losses are also affected by the method conventionally used in stamping the rotor and stator laminations. Stamping the laminations for conventional machines is done as follows: First the stator and rotor slots are stamped out and then the rotor lamination is stamped from the stator lamination. As a result, both stator and rotor teeth are sharply rectangular.

Apparently the laminations for switched reluctance motors up to now have been made in the same way. As a result, the stator and rotor poles or teeth have sharp, rectangular corners. Since switched reluctance motors have only one tooth per pole and since they operate on the attraction between teeth/poles, there is a very strong flux concentration at the corners of each pole, prior to and after the alignment of the stator and rotor poles, resulting in increased losses. Rounding of these corners would, on the other hand, appear to require a new method of lamination stamping.

Furthermore, the stamping method presently used on conventional machines requires final machining of the rotor surface, to obtain the exact rotor diameter. This machining normally results in short circuiting of some of the rotor laminations, as does the welding used to hold the laminations together. Although the frequency of the rotor flux in induction machines is low, this manufacturing method and the resulting short-circuiting of laminations causes additional losses which may amount to several percent of the total losses. In switched reluctance motors the machining necessary to obtain the exact rotor diameter would considerably increase the total losses given the frequency change of the rotor flux variations.

Finally, large leakage flux when the rotor is in the position of maximum magnetic reluctance results in flux lines perpendicular to the rotor and stator surfaces. Rectangular poles make the flux lines longer, further increasing the losses.

For the above reasons, most of the switched reluctance motors used up to now have high quality laminations, with a thickness of 0.014˝, which is smaller than in conventional machines. Furthermore, in order to reduce vibrations caused by the strong changes in mmf, present switched reluctance motors have rotor lamination assemblies which are bonded together by adhesives.

Reducing the number of rotor poles is advantageous in designing switched reluctance motors for operation at higher speeds. However with conventional rotor construction, it is not feasible to reduce the number of rotor poles below four. Even with four poles, the flux density (and thus the losses) is high due to the opening in the lamination stack for the motor shaft, which decreases the effective cross-section of the rotor core.

For example, a three-pole rotor in a switched reluctance motor has no room for a conventional shaft if the flux density in the rotor core is to be held at an acceptable level. At the same time, due to the odd number of rotor poles, the radial forces with a three-pole rotor are very large and unbalanced, requiring an even larger shaft than normal. These very strong one-directional radial forces require an exceptionally stiff rotor construction.

Among the objects and features of the present invention may be noted the provision of a switched reluctance motor with high speed, high horsepower and acceptable core losses.

Another object of the present invention is the provision of such a motor with a reduced number of rotor poles.

A third object of the present invention is the provision of such a motor with reduced flux bypass in the rotor.

A fourth object of the present invention is the provision of such a motor with a minimum effective flux path.

A fifth object of the present invention is the provision of improved stator and rotor laminations with reduced losses.

According to the invention these objects are achieved in an electric motor of the type defined hereinbefore which is
characterized in that the electric motor is a switched reluctance motor, the width of each stator tooth at the central bore being substantially the same as the spacing between adjacent stator teeth at the central bore, and the widths of the rotor teeth and the stator teeth being approximately the same.

Advantages embodiments of the invention are described in the dependant claims.

The invention will now be described by way of example with reference to the accompanying drawings, wherein:
Fig. 1 is a schematic illustration of a motor made in accordance with the present invention;
Fig. 2 is a schematic illustration similar to Fig. 1, but on a reduced scale, illustrating the direction of the mmf and the flow of flux in the motor of Fig. 1;
Fig. 2A is an electrical schematic illustrating a converter circuit for the motor of Fig. 1;
Fig. 3 is a simplified elevation illustrating the construction of the motor of Fig. 1;
Fig. 4 is an elevation, with parts broken away for clarity, of the motor of Fig. 1;
Fig. 5 is a bottom plan of an end clamp used in the motor of Fig. 1;
Fig. 5A is a side elevation, with parts broken away for clarity, of the end clamp of Fig. 5;
Fig. 6 is a bottom plan of a second embodiment of an end clamp used with the motor of Fig. 1;
Fig. 6A is a cross-sectional view taken along line 6A --6A of Fig. 6;
Fig. 7 is a schematic illustration of the stamping pattern for the rotor and stator laminations of the motor of Fig. 1; and
Fig. 7A is a diagrammatic representation of the stamping method by which the rotor and stator laminations of the motor of Fig. 1 are stamped.

Similar reference characters indicate similar parts throughout the several views of the drawings.

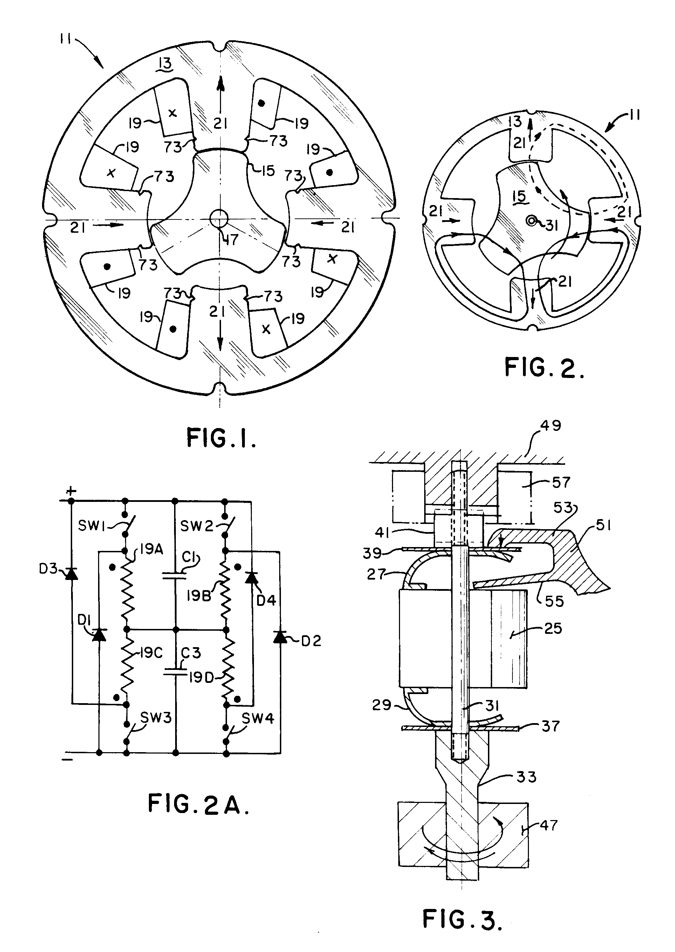

A switched reluctance motor 11 (Fig. 1) of the present invention includes a four-pole stator 13 whose four teeth extend radially inwardly from the stator yoke to define a central bore in which a three-pole rotor 15 is suitably mounted for rotation. The axis of rotation of rotor 15 is defined by a tension rod 17, as appears below. Phase windings 19 are wound around each tooth or pole of stator 13 with the polarities shown to provide the directions of mmf as indicated by the arrows labelled 21. The teeth of stator 13 are equally spaced about its perimeter and the gaps between the teeth as measured at the central bore of the stator are just slightly larger than the widths of the teeth themselves.

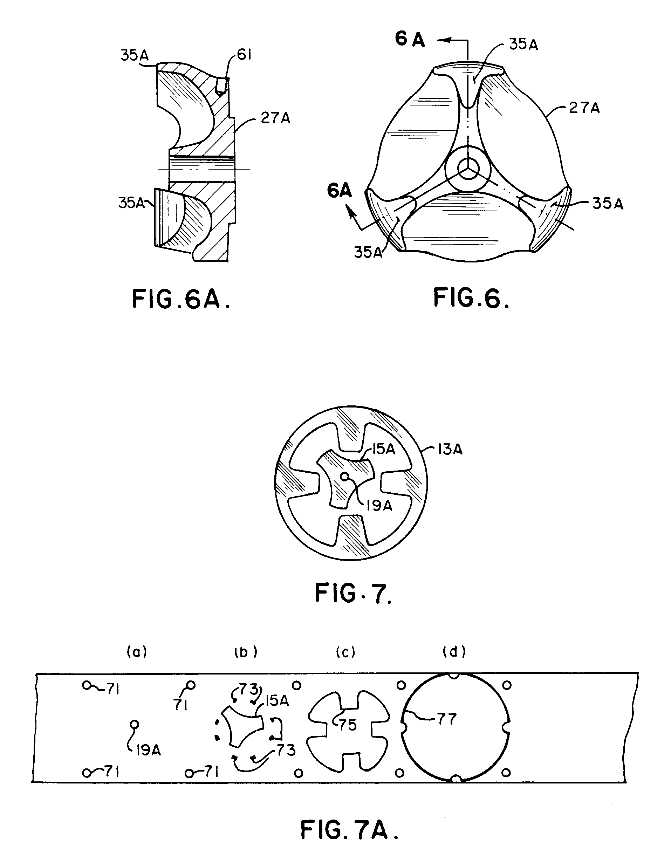

The teeth of rotor 15 are also equally spaced around its perimeter. The width of the teeth of rotor 15 is generally the same as the width of the stator teeth at the central bore, so as to minimize losses. The width of the rotor teeth is also slightly less than the gap between adjacent stator teeth for a reason which will become apparent in connection with the discussion of Fig. 7. It should also be noted that the teeth of both rotor and stator are rounded as illustrated best in Fig. 1 to minimizes flux concentration and losses.

In motor 11, as best illustrated in Fig. 2, the flux lines are as short as possible, while the mmf in stator yoke and poles always has the same direction. The mmf's between the phases always add since two of the opposing poles have an mmf towards the rotor center while in the other two the mmf has a direction from the rotor to the stator, as indicated by lines 21. This magnetic circuit allows a substantial reduction in core losses.

The converter circuit for motor 11 is shown in Fig. 2A. The converter takes filtered DC voltage of, for example, 315 volts and through the proper sequential operation of a set of four power transistor switches or the like SW1 through SW4, supplies power to the stator windings 19, here labelled 19A through 19D. The converter includes a pair of capacitors C1 and C3 which perform a voltage dividing function. Each winding has associated therewith a flyback diode D1 through D4 connected between its winding and one of the supply rails.

This converter arrangement has the advantage of being run by only four switching elements, which are controlled in a conventional manner by a control circuit (not shown) to energize their respective phase windings at the proper times. A chopping technique is used for limiting the current values through the windings throughout the full speed range of the motor, which can operate up to and above 6000 RPM.

Rotor 15 has no room for a conventional shaft if the flux density is to be held at acceptable levels in the rotor core. And due to the odd number of rotor poles (three), the unbalanced radial forces exerted on the rotor are very large. Thus, an exceptionally stiff rotor construction is required.

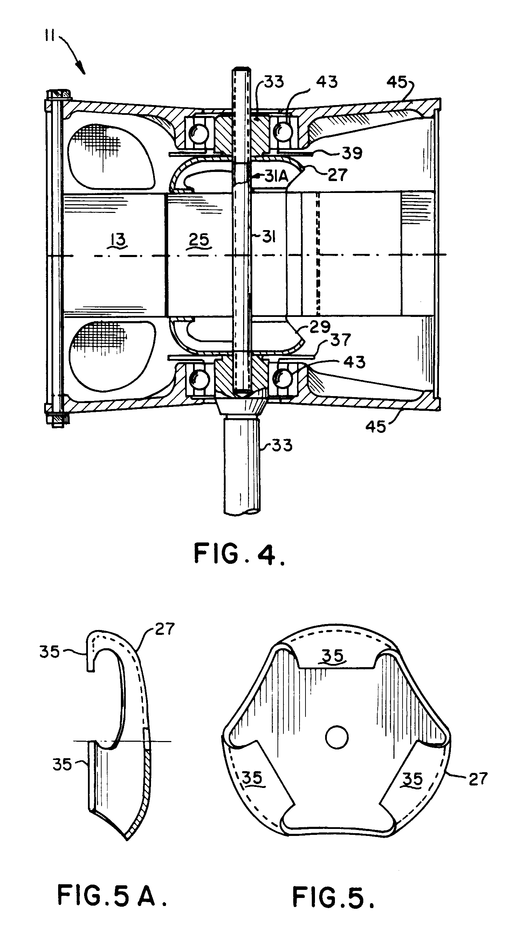

These requirements are achieved by taking a stack 25 (Figs. 3 and 4) of rotor laminations, stamped to their final outside diameter as described below in connection with Fig. 7, and pressing them together with a pair of identical end clamps 27 and 29. The end clamps are held together by a relatively thin, high quality tension rod 31 through the rotor center. At both ends tension rod 31 is screwed into a larger diameter motor shaft 33 (see Fig. 4). As shown in Fig. 4 at 31A tension rod 31 may be hollow. Moreover, instead of being screwed into the rotor shaft 33, the tension rod may be bonded to the shaft by a suitable adhesive.

The end clamps are made from non-magnetic stainless steel, as shown in Figs. 5 and 5A, or from cast aluminum, as shown in Figs. 6 and 6A (the end clamp is labelled 27A in the latter two Figures). Each of the embodiments of end clamp includes three feet 35 and 35A respectively, disposable directly above the teeth of the rotor laminations, for applying pressure to the stack of laminations. The feet extend down below the bodies of the end clamps so that pressure exerted on the clamps is transmitted to the rotor lamination stack. The end clamps need only be elastic enough to assure sufficient axial pressure on the rotor laminations under all rotor temperatures and conditions.

The sequence of rotor assembly is best illustrated in connection with Fig. 3. The tension rod 31 (being threaded at both ends) is first screwed in motor shaft 33. A balancing disc 37, end clamp 29, stack 25 of rotor laminations, second end clamp 27, and a second balancing disc 39 are then stacked, one after the other, on the tension rod. The assembly is then temporarily terminated by a nut 41, which represents at the same time the non-driving motor shaft end which will later go into one of a pair of motor bearings 43 (Fig. 4) mounted in a pair of motor end shields 45.

By using a holder 47 (Fig. 3), the assembly is lifted and the other end of tension rod 31 is screwed into a stable support 49. Following that, the rotor laminations are pressed down with three two-pronged tools 51 (only one of which is shown) displaced 120 degrees from each other. The upper prongs 53 of the tools exert the main pressure while the lower prongs 55 merely push the laminations so that they follow the movement of the upper end clamp 27.

After the laminations have been sufficiently compressed, a tool 57 tightens nut 41, so that it moves from its original position, shown in dotted lines in Fig. 3 to its final position, shown in solid lines. With this the process of compressing the laminations is completed and the assembly is unscrewed from support 49 by using holder 47.

Before the rotor compression procedure, the two ends of motor shaft 33 are only drilled and threaded to receive tension rod 31. Their final machining is done only after the compression cycle has been completed. This is done for two reasons. During the compression, the shaft outer surfaces which mate with the shaft bearings may get damaged. Secondly, it is not possible to hold the tolerances during the compression procedure to guarantee rotor shaft concentricity.

The final step in the rotor manufacture consists of rotor balancing. For that purpose, balancing disks 37 and 39 with outside diameters somewhat smaller than the rotor outside diameter are used. The balancing is achieved automatically by removing the necessary material from the balancing discs.

Alternatively, if aluminum end clamps 27A of Figs. 6 and 6A are used, the initial rotor imbalance would be lower than with the end clamps 27 of Figs. 5 and 5A. In that case, the balancing discs can be omitted altogether from the rotor construction. The fine balancing in that case is done by drilling holes such as hole 61 (Fig. 6A) through the aluminum end clamps as necessary.

Of course, although the above construction has been described in connection with a switched reluctance motor, it should be appreciated that such a construction is not so limited.

The method of stamping the rotor and stator laminations of motor 11 is illustrated in Figs. 7 and 7A. As indicated in Fig. 7, the stamping for the rotor lamination, labelled 15A and its central bore 19A are off-center with respect to the stamping for the stator lamination 13A. As a result one of the teeth of rotor lamination 15A is taken from the gap between two of the teeth of the stator lamination. (This gap is enlarged in Fig. 7 over that of Fig. 1 for clarity of illustration.) This arrangement, as opposed to the conventional stamping arrangement, allows the rotor and stator teeth to be stamped with rounded corner as best illustrated in Fig. 1.

The four stages, labelled a-d in Fig. 7A, of the stamping of both rotor and stator laminations from a single piece of metal starts with the punching of rotor bore opening 19A in stage a. Note that the rotor bore opening is off-center with respect to placement holes 71. Next the rotor lamination is stamped out along with a series of notches 73, best shown in Fig. 1. In the third stage, the interior configuration 75 of the stator lamination 13A is stamped out. And in the fourth stage the perimeter 77 of the stator lamination is stamped out, resulting in the finished stator lamination.

The methods and constructions described above provide several advantages. For one, they result in a sufficient cross-section in a three-pole rotor to reduce rotor core losses to an acceptable level. The three-pole rotor in turn reduces the stator losses by reducing the flux frequency in the stator yoke and poles, while still providing a substantial starting torque. Secondly, the rotor laminations with these methods are stamped to their final outside diameter, thus eliminating the rotor machining used with conventional manufacturing. This in turn eliminates the short circuiting of rotor laminations -- another source of core losses. Thirdly, the rotor and stator poles are stamped with rounded poles, thus eliminating the flux concentration in pole corners and reducing further the core losses. Finally, the rotor laminations are compressed so tightly that it is not necessary to apply any anti-vibrating adhesives to the laminations.

## Claims

1. An electric motor (11) comprising
a stator (13) having a yoke and a central bore rotation of a rotor (15) therein, said stator (13) having four equally spaced teeth extending radially inwardly from the yoke of the stator to define the central bore,
a rotor assembly (15) for rotation in the central bore of the stator (13), said rotor assembly (15) having three equally spaced teeth extending radially outwardly from the central axis of the motor (11) to terminate in close proximity to the stator teeth; and
stator windings (19) associated with the stator teeth to generate a magnetic field in the central bore to cause rotation of the rotor assembly (15),
characterized in that the motor (11) is a switched reluctance motor, the width of each stator tooth at the central bore being substantially the same as the spacing between adjacent stator teeth at the central bore, and the widths of the rotor teeth and the stator teeth being approximately the same.

2. The motor as set forth in claim 1 wherein the teeth of the stator (13) and the rotor assembly (15) have generally rounded corners.

3. The motor as set forth in claim 1 wherein the rotor assembly (15) comprises a stack of laminations (25) and means (27,29,31) for compressing the stack (25) to secure the stack (25) together against radial deformation during operation.

4. The motor as set forth in claim 3 wherein the compressing means (27,29,31) includes a tension rod (31) extending axially through the lamination stack (25).

5. The motor as set forth in claim 4 further including rotor shaft segments (33) axially disposed on each side of the rotor stack (25), said tension rod (31) being secured to both rotor shaft segments (33) to define the axis of rotation of the rotor assembly.

6. The motor as set forth in claim 5 wherein the transverse cross-sectional area of the tension rod (31) is substantially less than the transverse cross-sectional area of the rotor shaft segments (33).

7. The motor as set forth in claim 1 further including means (SW₁, SW₂, SW₃, SW₄, C1, C3, D1, D2, D3, D4,) for energizing the stator windings (19) so that the mmf through each tooth of the stator (13) is unidirectional for that tooth.

8. The motor as set forth in claim 1 further including means (SW₁, SW₂, SW₃, SW₄, C1, C3, D1, D2, D3, D4,) for energizing the stator windings (19) so that the pole associated with each winding (19) has a predetermined, unchanging polarity.

## Patentansprüche

1. Elektromotor (11) mit
einem Ständer (13), der ein Joch und eine zentrale Bohrung hat, in welcher ein Läufer (15) drehbar ist, wobei der Ständer (13) vier gleichabständige Zähne hat, die sich von dem Joch des Ständers aus radial einwärts erstrecken, um die zentrale Bohrung zu bilden,
einer Läuferbaugruppe (15) zur Drehung in der zentralen Bohrung des Ständers (13), wobei die Läuferbaugruppe (15) drei gleichabständige Zähne hat, die sich von der zentralen Achse des Motors (11) aus radial nach außen erstrecken, um in unmittelbarer Nähe der Ständerzähne zu endigen; und
Ständerwicklungen (19), die den Ständerzähnen zugeordnet sind, um ein Magnetfeld in der zentralen Bohrung zu erzeugen, das die Drehung der Läuferbaugruppe (15) bewirkt,
dadurch gekennzeichnet, daß der Motor (11) ein geschalteter Reluktanzmotor ist, wobei die Breite jedes Ständerzahns an der zentralen Bohrung im wesentlichen gleich dem Abstand zwischen benachbarten Ständerzähnen an der zentralen Bohrung ist und wobei die Breiten der Läuferzähne und der Ständerzähne ungefähr dieselben sind.

2. Motor nach Anspruch 1, wobei die Zähne des Ständers (13) und der Läuferbaugruppe (15) insgesamt abgerundete Ecken haben.

3. Motor nach Anspruch 1, wobei die Läuferbaugruppe (15) ein Paket von Blechen (25) und eine Einrichtung (27, 29, 31) zum Zusammendrücken des Pakets (25) aufweist, um das Paket (25) gegen radiale Verformung im Betrieb fest zusammenzuhalten.

4. Motor nach Anspruch 3, wobei die Zusammendrückeinrichtung (27, 29, 31) eine Spannstange (31) aufweist, die sich axial durch das Blechpaket (25) erstreckt.

5. Motor nach Anspruch 4, weiter mit Läuferwellenabschnitten (33), die axial auf jeder Seite des Läuferblechpakets (25) angeordnet sind, wobei die Spannstange (31) an beiden Läuferwellenabschnitten (33) befestigt ist, um die Drehachse der Läuferbaugruppe festzulegen.

6. Motor nach Anspruch 5, wobei die Querschnittsfläche der Spannstange (31) wesentlich kleiner als die Querschnittsfläche der Läuferwellenabschnitte (33) ist.

7. Motor nach Anspruch 1, weiter mit einer Einrichtung (SW₁, SW₂, SW₃, SW₄, C1, C3, D1, D2, D3, D4) zum Erregen der Ständerwicklungen (19), so daß die MMK in jedem Zahn des Ständers (13) für diesen Zahn unidirektional ist.

8. Motor nach Anspruch 1, weiter mit einer Einrichtung (SW₁, SW₂, SW₃, SW₄, C1, C3, D1, D2, D3, D4) zum Erregen der Ständerwicklungen (19), so daß der Pol, der jeder Wicklung (19) zugeordnet ist, eine vorbestimmte, sich nicht verändernde Polarität hat.

## Revendications

1. Moteur électrique comprenant un stator (13) ayant une culasse et un alésage central pour permettre la rotation d'un rotor (15) dans cet alésage, ce stator (13) ayant quatre dents équidistantes s'étendant radialement vers l'intérieur à partir de la culasse du stator afin de définir l'alésage central, un ensemble de rotor (15) destiné à tourner dans l'alésage central du stator (13), cet ensemble de rotor (15) ayant trois dents équidistantes s'étendant radialement vers l'extérieur à partir de l'axe central du moteur (11) en se terminant à proximité immédiate des dents du stator, et des enroulements statoriques (19) associés aux dents du stator afin de produire un champ magnétique dans l'alésage central pour provoquer la rotation de l'ensemble du rotor (15), caractérisé en ce que le moteur (11) est un moteur à réluctance alimenté par convertisseur, la largeur de chaque dent du stator, à l'endroit de l'alésage central, étant sensiblement la même que l'espacement entre des dents du stator voisines à l'endroit de l'alésage central, et les largeurs des dents du rotor et des dents du stator étant approximativement les mêmes.

2. Moteur suivant la revendication 1 caractérisé en ce que les dents du stator (13) et de l'ensemble du rotor (15) ont des angles généralement arrondis.

3. Moteur suivant la revendication 1 caractérisé en ce que l'ensemble du rotor (15) comprend une pile de feuillets (25) et des moyens (27,29,31) pour comprimer la pile (25) afin de fixer la pile (25) en un seul bloc à l'encontre d'une déformation radiale pendant le fonctionnement.

4. Moteur suivant la revendication 1 caractérisé en ce que les moyens de compression (27,29,31) comportent une tige de tension (31) s'étendant axialement à travers la pile de feuillets (25).

5. Moteur suivant la revendication 1 caractérisé en ce qu'il comporte en outre des segments d'arbre du rotor (33) disposés axialement de chaque côté de la pile de feuillets (25) du rotor, la tige de tension (31) étant fixée aux deux segments d'arbre du rotor (33) de manière à définir l'axe de rotation de l'ensemble du rotor.

6. Moteur suivant la revendication 5 caractérisé en ce que l'aire de la section transversale de la tige de tension (31) est notablement inférieure à l'aire de la section transversale des segments (33) de l'arbre du rotor.

7. Moteur suivant la revendication 1 caractérisé en ce qu'il comporte en outre des moyens (SW1,SW2,SW3,SW4,C1,C3, D1,D2,D3,D4) pour exciter les enroulements statoriques (19) de telle façon que la force magnétomotrice à travers chaque dent du stator (13) soit unidirectionnelle pour cette dent.

8. Moteur suivant la revendication 1 caractérisé en ce qu'il comporte en outre des moyens (SW1,SW2,SW3,SW4,C1,C3, D1,D2,D3,D4) pour exciter les enroulements statoriques (19) de telle façon que le pôle associé à chaque enroulement (19) ait une polarité prédéterminée invariable.
